# FASCICULE DE BREVET EUROPEEN

(11) **EP 2 335 044 B1**
(45) Date de publication et mention de la délivrance du brevet: **22.02.2012**
(21) Numéro de dépôt: 09783027.7
(22) Date de dépôt: 15.09.2009
(51) Int. Cl.: G01N 3/42

(54) **DISPOSITIF D'INDENTATION CONTINUE OU INSTRUMENTEE A SURFACE DE SUPPORT CONVEXE ET SON UTILISATION, NOTAMMENT POUR L'INDENTATION DE TOLES**
KONTINUIERLICHE ODER INSTRUMENTIERTE EINDRUCKVORRICHTUNG MIT KONVEXER TRÄGEROBERFLÄCHE UND VERWENDUNG DAVON, BESONDERS ZUM EINDRÜCKEN VON BLECHEN
CONTINUOUS OR INSTRUMENTED INDENTATION DEVICE WITH CONVEX BEARING SURFACE AND USE THEREOF, PARTICULARLY FOR METAL SHEET INDENTATION

(30) Priorité: 15.09.2008 FR 0856192
(43) Date de publication de la demande: 22.06.2011
(73) Titulaire: Université de Rennes 1, 35000 Rennes (FR)
(72) Inventeur: MAUVOISIN, Gérard, F-35135 Chantepie (FR)
(74) Mandataire: Branger, Jean-Yves
(86) Numéro de dépôt international: PCT/EP2009/061942
(87) Numéro de publication internationale: WO 2010/029179

(56) Documents cités:
- DE-A1-102005 012 365
- DE-C2- 4 210 599
- JP-A- 8 122 239
- US-A- 5 965 896

## Description

La présente invention est relative à un dispositif d'indentation dite "continue" ou "instrumentée". Elle se rapporte également à l'utilisation d'un tel dispositif pour l'indentation de tôles, notamment de tôles minces, de plaques ou de matériaux en feuilles.

L'indentation "continue" ou "instrumentée" consiste à mesurer l'effort et le déplacement subi par un indenteur au cours de son enfoncement dans un matériau à tester.

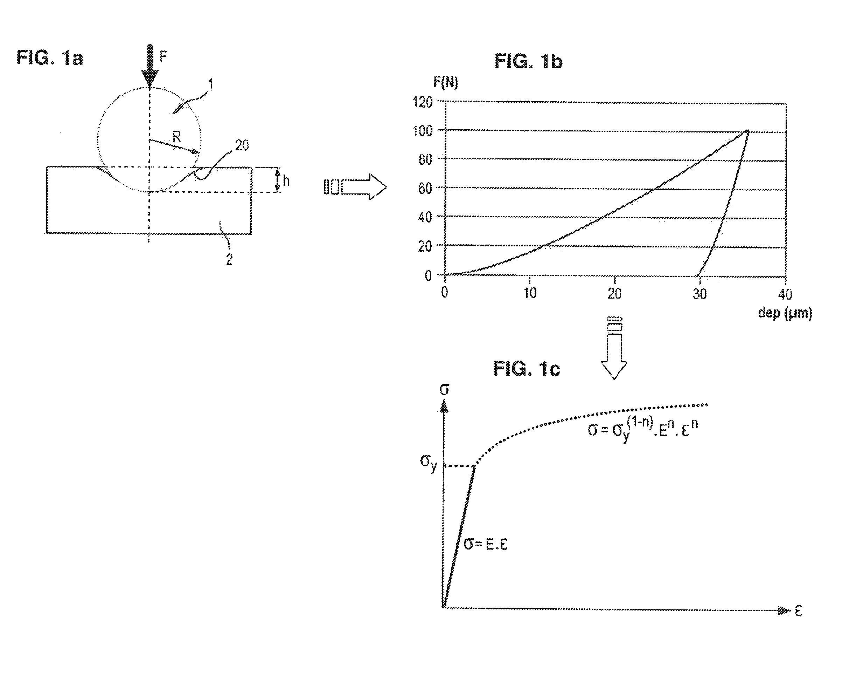

C'est ce qui a été représenté sur la figure 1a annexée dans laquelle la pointe (en forme de bille de rayon R) d'un indenteur est référencée 1 et le matériau à tester est référencé 2. L'enfoncement de la pointe 1 assure une déformation formant empreinte 20 à la surface du matériau 2, de profondeur h.

La courbe d'indentation obtenue, notée F(h) et dont un exemple est visible à la figure 1b, représente l'évolution de l'effort appliqué F, en fonction de l'enfoncement h de l'indenteur dans le matériau. Cette courbe, incluant une phase de chargement puis une phase de déchargement, dépend de nombreux paramètres expérimentaux, ainsi que des propriétés mécaniques du matériau testé.

Une fois les paramètres expérimentaux maîtrisés et fixés, la courbe d'indentation, est caractéristique du matériau (voir figure 1c). Elle peut être exploitée pour déterminer les paramètres de la loi de comportement du matériau, habituellement obtenus par un essai de traction sur une éprouvette de ce matériau, ce qui est destructif et nécessite un certain volume de matière pour la réalisation d'une éprouvette spécifique et normalisée.

Au contraire, le test d'indentation est non destructif, ne requiert qu'un petit volume de matière et ne nécessite pas d'éprouvette spécifique.

L'essai d'indentation est un test très local, surtout lorsqu'il est utilisé à l'échelle nanométrique, pour tester des couches très fines, et qui n'empêche pas une utilisation ultérieure de l'échantillon sur lequel le test a été réalisé.

Toutefois, le manque de précision sur les valeurs de l'enfoncement mesuré rend impossible la détermination précise des paramètres des matériaux habituellement extraits à partir d'une courbe d'indentation.

Par exemple, on détermine la dureté H du matériau à partir de l'enfoncement correspondant à la charge maximale appliquée. On détermine également le module réduit E* selon la méthode d'Oliver et Pharr, en exploitant la pente de la courbe F(h) au début du déchargement.

Plusieurs méthodes permettent aussi de déterminer la limite d'élasticité du matériau et un ou deux paramètres d'écrouissage. Ces méthodes s'appuient sur certaines grandeurs extraites de la courbe d'indentation, comme la courbure, l'énergie élastique, l'énergie plastique, l'énergie totale, ou le rapport énergie plastique sur énergie totale. Mais toutes ces grandeurs dépendent directement de l'évolution de l'enfoncement h de l'indenteur au cours de l'essai.

Ainsi, les paramètres du matériau ne peuvent être déduits avec précision d'une courbe d'indentation que si l'enfoncement est évalué correctement et avec précision.

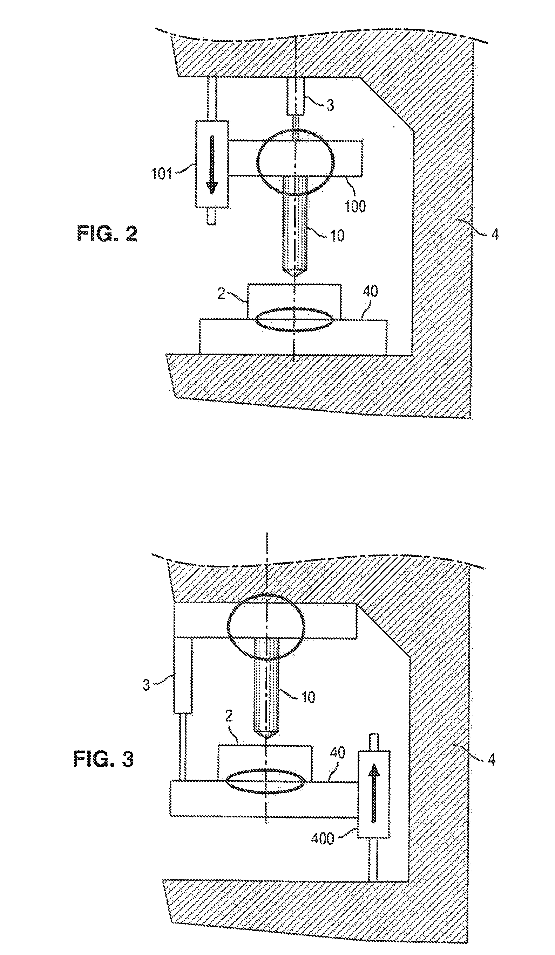

Aux figures 2 et 3 sont représentées très schématiquement des structures de dispositifs d'indentation bien connus.

Elles comprennent un bâti rigide 4 qui supporte une platine 40 de réception d'un matériau 2 à tester.

Dans la forme de réalisation de la figure 2, l'indenteur 10 est fixé verticalement à l'extrémité d'un support 100, qui est rendu mobile, également en direction verticale, par des moyens moteurs 101. Un capteur de déplacement 3 est fixé entre la partie supérieure du bâti 4 et du support 100. Il mesure le déplacement de la pointe de l'indenteur 10 dans le matériau.

Dans la variante de la figure 3, l'indenteur 10 est fixe et c'est le support 40 du matériau à tester qui est pourvu de moyens moteurs 400 pour assurer son déplacement en direction verticale vers l'indenteur.

Quelle que soit la méthode mise en oeuvre, la première source d'erreur dans l'évaluation de l'enfoncement est due au fait qu'en pratique, cet enfoncement, qui correspond au déplacement du point le plus bas de l'indenteur 10, n'est pas mesuré directement mais déduit d'un déplacement mesuré, dans le meilleur des cas, entre l'indenteur 10 et l'échantillon 2.

Pour pallier cette difficulté, différentes solutions plus ou moins satisfaisantes ont été trouvées.

La plupart des solutions intègrent dans la valeur mesurée, des déplacements liés aux déformations de certains éléments du bâti ou des déplacements dus à des défauts géométriques du banc d'essai.

La seconde source d'erreur est due à l'utilisation d'indenteurs du commerce, prévus initialement pour déterminer la dureté à partir de l'empreinte laissée dans le matériau, après application puis retrait d'une charge. Les indenteurs sont constitués d'une pointe en diamant ou en carbure de tungstène, taillée selon une géométrie qui dépend du type d'essai de dureté, qui est sertie et/ou collée dans un support cylindrique en acier, avec une extrémité qui dépend du mode de fixation sur le banc d'essai.

Le sertissage met en contact deux surfaces qui ne s'épousent jamais suffisamment bien pour éviter les déformations à l'interface entre la pointe et son support entrainant des perturbations sur la mesure de l'enfoncement

Ces déformations sont toujours assez faibles mais jamais négligeables au regard des grandeurs mises en jeu au cours du test d'indentation.

Les caractéristiques géométriques des surfaces en contact (incluant la rugosité) étant inconnues de l'utilisateur, aucune modélisation ne peut être faite pour déterminer les déformations responsables du rapprochement de la pointe vers son support au cours de l'essai.

Ces deux sources d'erreur ne permettent donc pas d'assimiler le déplacement mesuré à l'enfoncement requis.

Par ailleurs, l'indentation est généralement pratiquée à une échelle qui dépend du volume de matière disponible ou de l'épaisseur des couches à tester, dans le cas de revêtements. Cela signifie qu'on adapte la charge à l'épaisseur de la pièce ou du revêtement à étudier.

Ainsi, dans le cas de tôles métalliques d'épaisseur de l'ordre de 0,3 à 2 mm, il faudrait pratiquer l'indentation à l'échelle micrométrique voire nanométrique.

Or, les matériaux métalliques ont une microstructure composée de multiples grains de différentes natures et différentes tailles qui en font un matériau hétérogène à l'échelle microscopique.

Sur de tels matériaux, les courbes d'indentation obtenues à faible ou très faible charge (inférieure au newton) sont peu reproductibles, car elles dépendent de l'endroit où est pratiqué le test.

En appliquant une forte charge (jusqu'à 100 ou 200N), la déformation plastique s'étend sur un volume suffisamment important, en regard de la taille des grains, pour être représentatif du matériau. Ainsi, l'indentation à l'échelle macroscopique permet de remonter au comportement macroscopique du matériau.

La difficulté rencontrée lors de l'indentation macroscopique des tôles est liée à la géométrie des surfaces. En effet, il n'est pas possible, concrètement, de réaliser des échantillons de tôle avec une surface d'appui parfaitement plane.

Même la rectification ne peut pas gommer les défauts de planéité sur des tôles minces. En effet, le plateau magnétique utilisé pour fixer la tôle au cours de la rectification exerce un champ de forces qui déforme la tôle. Après la rectification, la surface rectifiée est plane tant qu'on ne retire pas la tôle de son support magnétique.

Concrètement, lorsqu'on retire la tôle du plateau magnétique, on peut avoir des défauts de planéité de plusieurs dizaines de micromètres (ces défauts sont parfois amplifiés durant la phase de polissage manuel).

C'est peu, mais la flexion qui en résulte peut entraîner un déplacement parasite sous le capteur de déplacement, qui est de l'ordre des profondeurs d'enfoncement de l'indenteur au cours du test de l'indentation.

Il en résulte que l'on n'obtient pas la même courbe d'indentation selon l'endroit où l'on réalise le test sur l'échantillon.

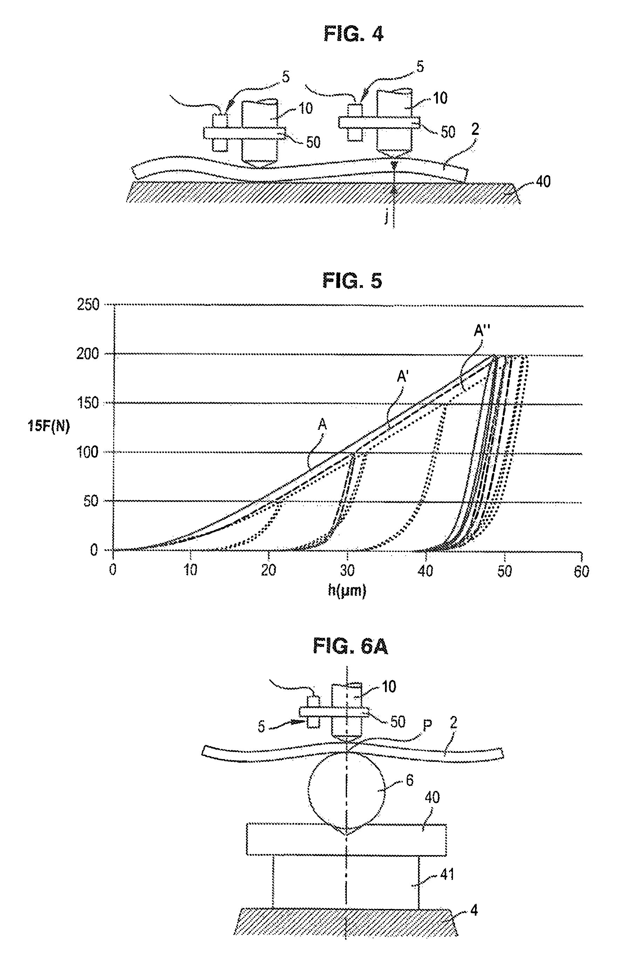

La figure 4 annexée illustre cette situation. On y a volontairement exagéré les défauts de planéité de la liste de matériaux 2 à tester.

Sur cette figure ont été représentés deux indenteurs 10 équipés d'un support 50 pour un capteur 5 de mesure d'enfoncement.

Selon que l'indenteur (partie gauche de la figure) se situe à l'aplomb d'une zone de la tôle bien en appui contre son support 40, ou à la verticale d'un défaut de planéité (partie droite de la figure - existence d'un jeu j sous la tôle), la mesure d'enfoncement enregistrée par le dispositif ne sera pas la même.

On observe des problèmes de reproductibilité des résultats. Les courbes F(h) obtenues ne sont pas superposables comme dans le cas de matériaux massifs.

C'est ce qui est représenté sur la figure 5 ci-jointe, dans laquelle trois courbes A, A', A", non superposables sont obtenues en testant le même échantillon à différents endroits.

La présente invention a pour but de pallier ces inconvénients.

En d'autres termes, elle vise à proposer un dispositif d'indentation qui s'affranchit des défauts de planéité du matériau que l'on souhaite tester.

Elle vise également à proposer un dispositif d'indentation qui reprend la structure générale des dispositifs d'indentation connus.

Ainsi, selon un premier aspect de l'invention, celle-ci concerne un dispositif d'indentation dite "continue" ou "instrumentée" d'un matériau, tel que défini dans la revendication 1. Le document JP08122239 décrit comprenant les caractéristiques du préambule de la revendication 1.

Grâce à ce dispositif, il va être possible d'obtenir des courbes d'indentation sur des tôles, avec la même fiabilité que sur un matériau massif. Il permet une utilisation des courbes d'indentation, sans calibration, pour une évaluation quantitative des propriétés des matériaux.

Par ailleurs, ce dispositif permet de s'affranchir de toutes les déformations "externes" inhérentes par exemple au bâti de l'indenteur.

Selon d'autres caractéristiques avantageuses et non limitatives de ce dispositif :
- ladite surface convexe est la surface d'une sphère ou d'une portion de sphère ;
- lesdits moyens de support comprennent également une platine sur laquelle repose ladite sphère ou portion de sphère ;
- ladite platine comporte des moyens de calage et/ou de fixation de ladite sphère ou portion de sphère ;
- ladite surface convexe est d'une pièce avec une platine de support ;
- ledit indenteur est en carbure de tungstène ou tout autre matériau présentant une grande dureté ;
- lesdits capteurs sont du type capacitif sans contact ;
- il comprend des moyens aptes à enregistrer la distance mesurée par chacun des capteurs, ainsi qu'à calculer la moyenne de ces trois distances, cette moyenne étant considérée comme étant la valeur d'enfoncement de l'indenteur dans le matériau ;
- ladite surface convexe est constituée par la pointe d'un second indenteur qui s'étend dans le prolongement et en opposition au premier indenteur ;
- il affecte la forme d'une paire de pinces, chaque indenteur étant solidaire d'une mâchoire de cette paire de pinces ;
- seul l'un des indenteurs est pourvu de moyens de mesure d'effort ;
- seul l'un des indenteurs est pourvu de moyens de mesure de déplacement ;
- les deux indenteurs sont pourvus de moyens de mesure d'effort et de déplacement.

L'invention se rapporte également à l'utilisation d'un dispositif selon l'une des caractéristiques précédentes pour l'indentation "continue" ou "instrumentée" de tôles, en particulier de tôles minces, de plaques ou de matériaux en feuilles.

D'autres caractéristiques de la présente invention apparaîtront à la lecture de la description détaillée qui va suivre de certains modes de réalisation. Cette description sera faite en référence aux dessins annexés dans lesquels :
- la figure 6A est une vue très schématique d'une première forme de réalisation du dispositif selon l'invention ;
- la figure 6B est un schéma montrant l'installation dans laquelle est intégré le dispositif selon l'invention ;
- la figure 7 est une vue schématique, de dessous, d'un indenteur qui forme partie intégrante du dispositif selon l'invention, et de trois capteurs (ou palpeurs) qui l'équipent ;
- la figure 8 montre un ensemble de courbes donnant la valeur de l'enfoncement d'un indenteur en fonction de la charge appliquée, en utilisant un dispositif selon l'invention ;
- la figure 9 est une vue de face d'une variante de réalisation du dispositif ;
- la figure 10 est une vue agrandie de la partie de la figure 9 repérée par un cercle.

On se reporte maintenant à la figure 6A dans laquelle on a représenté partiellement un dispositif d'indentation continue conforme à la présente invention.

Celui-ci a été représenté partiellement, afin de se focaliser seulement sur les aspects innovants de ce dispositif.

On y reconnaît un indenteur 10 de type connu qui s'étend verticalement selon un axe XX'.

Pour simplifier la figure, les moyens qui permettent de déplacer verticalement de haut en bas et inversement cet indenteur, n'ont pas été représentés.

Le dispositif est également pourvu d'une platine 40 de réception d'un matériau à tester, cette platine reposant sur des moyens 41 capteurs d'effort, supportés eux-mêmes par le bâti 4 du dispositif.

Conformément à la présente invention, les moyens de support du matériau 2 à tester comprennent, dans le prolongement de l'axe longitudinal XX' de l'indenteur 10, une surface convexe de réception du matériau 2, orientée vers l'indenteur.

En l'occurrence, cette surface convexe est la surface d'une sphère 6 qui est disposée sur la platine 40. A cet effet, il a été pratiqué à la surface de cette platine 40 un alésage assurant un contact linéaire annulaire entre la sphère et la platine destiné à immobiliser la sphère 6.

Dans un mode de réalisation non représenté, la platine 40 pourrait être pourvue de moyens de fixation de ladite sphère.

Cette sphère est de préférence en un matériau dur qui ne se déforme qu'élastiquement au cours de l'essai.

Bien entendu, le diamètre de cette sphère doit être suffisant pour y faire tenir en équilibre l'échantillon de matériau à tester. Cela signifie, plus généralement que le rayon de courbure de la surface convexe doit être inférieur à celui du matériau 2, dans la région d'appui sur cette surface.

Et on comprend que lorsque la sphère est centrée sur l'axe vertical XX' de l'indenteur 10, l'effort vertical de l'indenteur sur le matériau 2 a pour réaction un effort vertical de la sphère sur ce matériau, au droit du point de contact.

Ainsi, on évite la flexion du matériau 2 au cours de l'essai.

Dans des modes de réalisation non représentés, la sphère 6 pourrait être remplacée par une portion de sphère ou par tout autre élément qui présente une surface convexe de contact avec le matériau à tester, de sorte que la zone d'appui de ce matériau sur ce support soit ponctuelle ou quasi ponctuelle.

A la figure 6A sont également représentés des moyens de mesure de l'enfoncement de l'indenteur dans le matériau 2.

Ces moyens comprennent un support 50 solidaire de l'indenteur 10 et des palpeurs 5 fixés à ce support 50.

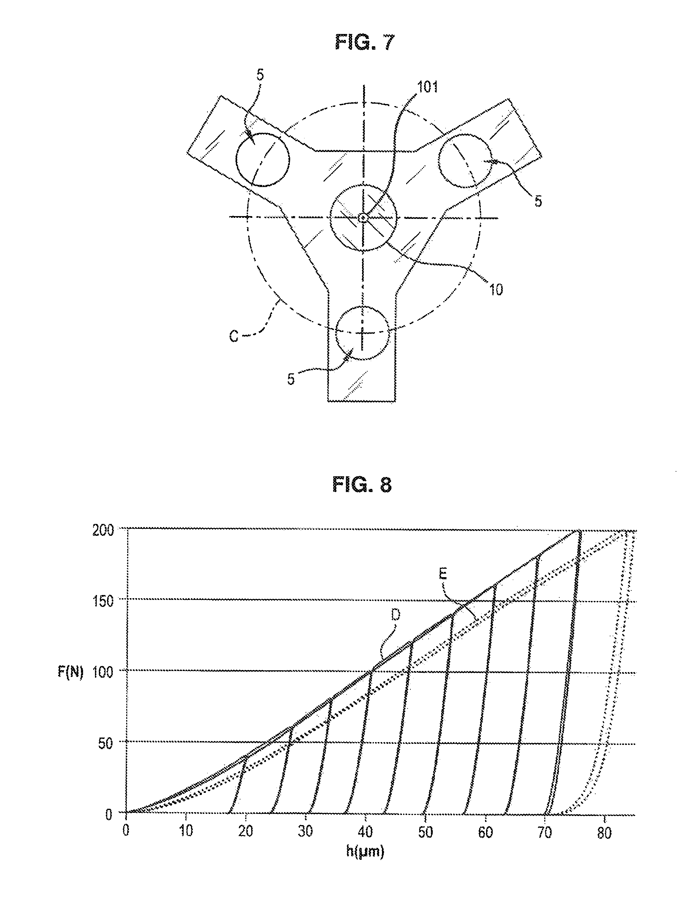

Ces palpeurs ou capteurs sont particulièrement visibles à la figure 7.

Ils sont au nombre de trois ou plus, disposés selon un cercle fictif C centré sur l'axe XX' de l'indenteur 10, équidistants angulairement les uns des autres et à égale distance de l'axe de l'indenteur. Dans la configuration à trois capteurs de la figure 7, ceux-ci constituent les sommets d'un triangle équilatéral au centre duquel se trouve l'indenteur.

Il s'agit de préférence de capteurs sans contact de type capacitif, c'est-à-dire aptes à mesurer, via des moyens adaptés, notamment informatiques, une valeur potentiométrique fonction de l'écartement entre ces capteurs et le matériau ciblé.

Des moyens informatiques, non représentés à la figure 6A, sont prévus pour transformer cette valeur en une distance.

Le fait que l'on utilise ici trois capteurs équidistants angulairement permet de compenser d'éventuels écarts de distance lue par l'un ou par l'autre.

Afin de tenir compte de cette variation, les moyens informatiques sont également aptes à calculer la moyenne des trois mesures et à considérer cette moyenne comme égale à la valeur d'enfoncement de l'indenteur dans le matériau.

Sur la figure 7 est également visible la pointe 101 de l'indenteur 10.

Celui-ci est de type monobloc, usiné dans la masse d'une pièce de carbure de tungstène. En d'autres termes, la pointe 101 est d'une seule pièce avec l'indenteur 10.

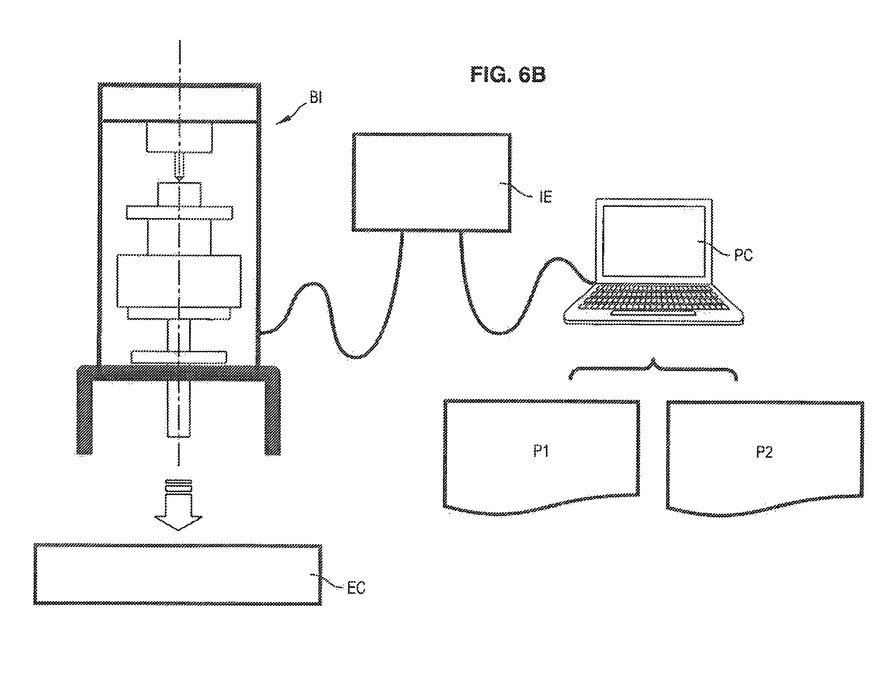

Une installation intégrant le dispositif selon l'invention est très schématiquement représentée à la figure 6B. On a désigné respectivement BI et EC un banc d'indentation continu classique, et les équipements complémentaires qu'il reçoit (platine 40, sphère 6, etc) pour la mise en oeuvre de la présente invention.

Ce banc est relié à un ordinateur PC, via une interface électronique d'acquisition des mesures réalisées par le banc.

P1 et P2 désignent des logiciels chargés dans l'ordinateur, adaptés pour traiter les données acquises.

La réalisation d'un test d'indentation est faite en prenant compte en premier lieu les paramètres de l'essai d'indentation (tels que le nom de l'application, la vitesse de l'essai, la vitesse d'acquisition, le rayon de la pointe d'indentation, l'effort maximum qui sera appliqué, le nombre d'étapes, le nombre de cycles en fin de chargement).

On réalise alors l'essai.

Un logiciel ou plusieurs logiciels associé(s) assume(nt) alors plusieurs tâches en parallèle à savoir :
- la commande de la platine de déplacement vertical ;
- l'acquisition simultanée de l'effort axial et des trois valeurs de déplacement vertical ;
- l'affichage de l'évolution de l'effort en fonction du temps ;
- l'affichage de l'évolution de l'effort en fonction de l'enfoncement de l'indenteur.

Au final le logiciel enregistre les données dans un fichier.

Ces données peuvent être exploitées sur un tableur, grâce à un logiciel spécifique ou par une procédure d'analyse inverse.

A la figure 8 sont représentées les courbes d'indentation obtenues d'une part avec le dispositif selon l'invention (courbes D), et avec un dispositif sans support sphérique (courbes E).

Les courbes D se superposent beaucoup mieux que les courbes E, ce qui montre que le dispositif selon l'invention permet de mettre en oeuvre des essais reproductibles.

Par ailleurs, les courbes D présentent une plus grande rigidité que les courbes E. En effet, dans la configuration avec support sphérique, le déplacement mesuré n'est pas perturbé par une flexion de la tôle sous l'indenteur. On observe enfin que, quel que soit le type de support, le déplacement plastique résiduel en fin d'essai est le même. Ceci renforce l'idée selon laquelle la flèche induite par la flexion, qui s'ajoute à l'enfoncement en l'absence de support sphérique, est élastique.

C'est grâce à la combinaison des caractéristiques selon l'invention, que de tels résultats sont obtenus, le dispositif permettant de s'affranchir de toute déformation parasite, c'est-à-dire étrangère au matériau à tester.

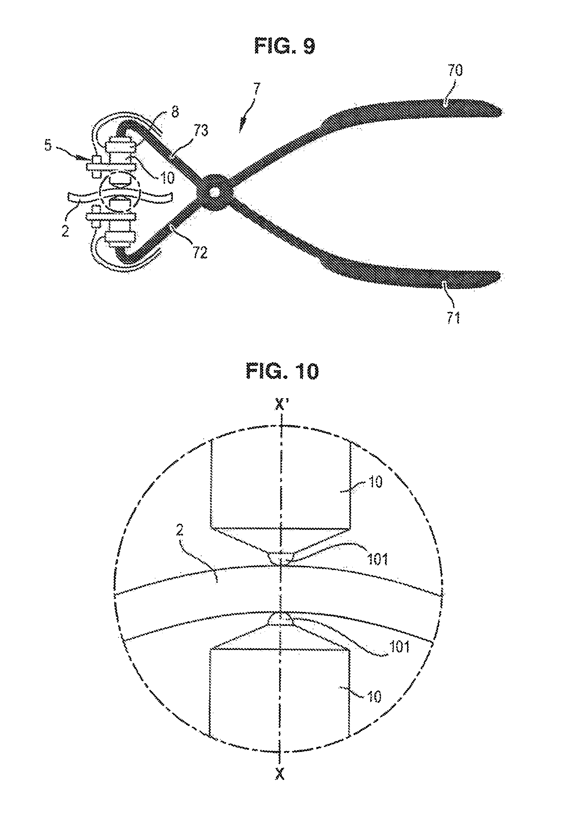

A la figure 9 est visible un mode de réalisation différent du dispositif d'indentation.

Celui-ci prend la forme d'une paire de pinces 7 munie de poignées 70 et 71 ainsi que de deux mâchoires associées 72 et 73.

A ces mâchoires 72 et 73 sont associés deux dispositifs d'indentation conformes à l'invention disposés en regard l'un de l'autre, de sorte que la pointe 101 d'un indenteur 10 constitue la surface convexe de réception du matériau et inversement.

Cette situation est particulièrement visible à la figure 10 dans laquelle on note la présence des deux indenteurs 10 disposés selon le même axe XX', la pointe 101 de chacun constituant une surface de support vis-à-vis de l'autre.

Cette pince est donc équipée de deux dispositifs d'indentation en opposition, composés chacun d'un indenteur monobloc, de 3 capteurs capacitifs disposés à 120°, autour et équidistants de l'axe de l'indenteur, et d'un capteur d'effort.

Cette pince peut être munie d'un seul capteur d'effort situé sur la mâchoire supérieure ou sur la mâchoire inférieure. Une configuration à deux capteurs d'effort se justifie tout particulièrement lorsque la tôle à tester est suffisamment lourde pour initier l'indentation sous son propre poids.

Les deux indenteurs peuvent avoir ou non la même géométrie, car l'acquisition des données se fait séparément pour les capteurs supérieurs et inférieurs.

Dans le cas où l'indenteur inférieur, qui joue le rôle de support convexe, à la même courbure que l'indenteur supérieur, la pince réalise une double indentation, parfaitement symétrique lorsque le matériau testé est parfaitement homogène sur son épaisseur.

Dans le cas où les deux indenteurs ont rigoureusement la même géométrie, et lorsque le matériau testé est parfaitement homogène, un seul jeu de 3 capteurs de déplacement, fixé sur l'indenteur supérieur, est suffisant pour réaliser correctement la mesure car le dispositif à une structure symétrique.

Toutefois, si le matériau testé présente un comportement mécanique différent sur chacune des faces supérieure et inférieure, ou si la géométrie des deux indenteurs est légèrement différente, il est nécessaire de placer deux dispositifs d'indentation comme présenté sur la figure 9 pour réaliser une mesure correcte, c'est-à-dire avec des capteurs de déplacement associés à chaque indenteur. Cette configuration, avec des géométries d'indenteur parfaitement identiques, pourra justement permettre de détecter une éventuelle différence de comportement mécanique entre la face supérieure et la face inférieure de la tôle étudiée.

Il est clair que le dispositif de la présente invention trouve application pour l'indentation de tôles minces. Toutefois, elle s'applique à l'indentation de matériau, qu'elle que soit leur épaisseur et leur forme. Ce dispositif convient également pour l'indentation de matériaux constitués de couches de nature différente.

Enfin, la pince décrite ci-dessus est particulièrement pratique pour réaliser des tests d'indentation "in situ".

## Revendications

1. Dispositif d'indentation dite "continue" ou "instrumentée" d'un matériau (2), qui comprend :
- un indenteur (10) ;
- des moyens de support (40 ; 6) du matériau (2) à indenter ;
- des moyens de déplacement de l'indenteur (10) et/ou des moyens de support (40 ; 6), pour mettre en contact ledit indenteur (10) avec ledit matériau (2), et l'enfoncer dans celui-ci ;
- des moyens de mesure (8 ; 5) de l'effort et du déplacement de l'indenteur (10) au cours de son enfoncement dans le matériau (2),
- lesdits moyens de support (40 ; 6) comprennent, dans le prolongement de l'axe longitudinal (X-X') dudit indenteur (10), une surface convexe (6) de réception dudit matériau (2), orientée vers l'indenteur (10) de sorte que ledit matériau (2) est apte à reposer sur cette surface (6) de manière ponctuelle ou quasi-ponctuelle ;
- ledit indenteur (10) est monobloc, c'est à dire qu'il comprend une pointe d'indentation (101) qui est d'une pièce avec le corps dudit indenteur ;
c aractérisé par le fait que : - lesdits moyens de mesure du déplacement de l'indenteur (10) au cours de son enfoncement dans le matériau (2) comprennent au moins trois capteurs (5) de déplacement, disposés angulairement de manière équidistante autour dudit indenteur (10).

2. Dispositif selon la revendication 1, **caractérisé par le fait que** ladite surface convexe est la surface d'une sphère (6) ou d'une portion de sphère.

3. Dispositif selon la revendication 2, **caractérisé par le fait que** lesdits moyens de support comprennent également une platine (40) sur laquelle repose ladite sphère (6) ou portion de sphère.

4. Dispositif selon la revendication 3, **caractérisé par le fait que** ladite platine (40) comporte des moyens de calage (401) et/ou de fixation de ladite sphère (6) ou portion de sphère.

5. Dispositif selon la revendication 1, **caractérisé par le fait que** ladite surface convexe (6) est d'une pièce avec une platine (40) de support.

6. Dispositif selon l'une des revendications précédentes, **caractérisé par le fait que** ledit indenteur (10) est en carbure de tungstène ou en tout autre matériau de grande dureté.

7. Dispositif selon l'une des revendications précédentes, **caractérisé par le fait que** lesdits capteurs (5) sont de type capacitif sans contact.

8. Dispositif selon l'une des revendications précédentes, **caractérisé par le fait qu'**il comprend des moyens aptes à enregistrer la distance mesurée par chacun des capteurs (5), ainsi qu'à calculer la moyenne de ces trois distances, cette moyenne étant considérée comme étant la valeur d'enfoncement de l'indenteur (10) dans le matériau (2).

9. Dispositif selon l'une des revendications 1 et 6 à 8 quand ces dernières sont dépendantes de la revendication 1, **caractérisé par le fait que** ladite surface convexe (6) est constituée par la pointe (101) d'un second indenteur (10) qui s'étend dans le prolongement et en opposition au premier indenteur (10).

10. Dispositif selon la revendication 11, **caractérisé par le fait qu'**il affecte la forme d'une paire de pinces, chaque indenteur (10) étant solidaire d'une mâchoire (72, 73) de cette paire (7) de pinces.

11. Dispositif selon l'une des revendications 9 ou 10, **caractérisé par le fait que** seul l'un des indenteurs (10) est pourvu de moyens de mesure (8) d'effort.

12. Dispositif selon l'une des revendications 9 à 11, **caractérisé par le fait que** seul l'un des indenteurs (10) est pourvu de moyens de mesure (5) de déplacement.

13. Dispositif selon l'une des revendications 9 ou 10, **caractérisé par le fait que** les deux indenteurs (10) sont pourvus de moyens de mesure (8 ; 5) d'effort et de déplacement.

14. Utilisation d'un dispositif selon l'une des revendications précédentes, pour l'indentation "continue" ou "instrumentée" de tôles (2), en particulier de tôles minces, de plaques ou de matériaux en feuilles.

## Claims

1. A device for so-called "continuous" or "instrumented" indentation of a material (2), which comprises:
- an indentor (10) ;
- means (40; 6) for supporting the material (2) to be indented;
- means for displacing the indentor (10) and/or supporting means (40; 6), for putting said indentor (10) in contact with said material (2) and driving it into the latter;
- means (8 ; 5) for measuring the force and the displacement of the indentor (10) during its sinking into the material (2),
- said supporting means (40; 6) comprise, in the extension of the longitudinal axis (X-X') of said indentor (10), a convex surface (6) for receiving said material (2), oriented towards the indentor (10) so that said material (2) is capable of resting on this surface (6) in a point-like or quasi point-like way;
- said indentor (10) is a one-piece indentor, i.e. it comprises an indentation tip (101) which is of a single piece with the body of said indentor;
**characterised by** the fact that:
- said means for measuring the displacement of the indentor (10) during its sinking into the material (2) comprise at least three displacement sensors angularly positioned in an equidistant away around said indentor (10).

2. The device according to claim 1, **characterised by** the fact that said convex surface is the surface of a sphere (6) or of a sphere portion.

3. The device according to claim 2, **characterised by** the fact that said supporting means also comprise a plate (40) on which rests said sphere (6) or sphere portion.

4. The device according to claim 3, **characterised by** the fact that said plate (40) includes means (401) for blocking and/or attaching said sphere (6) or sphere portion.

5. The device according to claim 1, **characterised by** the fact that said convex surface (6) is of a single piece with a supporting plate (40).

6. The device according to any of the preceding claims, **characterised by** the fact that said indentor (10) is in tungsten carbide or in any other material of great hardness.

7. The device according to any of the preceding claims, **characterised by** the fact that said sensors (5) are of the contactless capacitive type.

8. The device according to any of the preceding claims, **characterised by** the fact that it comprises means capable of recording the distance measured by each of the sensors (5), as well as calculating the average of these three distances, this average being considered as the sinkage depth value of the indentor (10) in the material (2) .

9. The device according to any of claims 1 and 6 to 8 when the latter depend on claim 1, **characterised by** the fact that said convex surface (6) is formed by the tip (101) of a second indentor (10) which extends in the extension and in opposition to the first indentor (10).

10. The device according to claim 11, **characterised by** the fact that it assumes the form of a pair of claws, each indentor (10) being integral with a jaw (72, 73) of this pair (7) of claws.

11. The device according to any of claims 9 or 10, **characterised by** the fact that only one of the indentors (10) is provided with force measurement means (8) .

12. The device according to any of claims 9 to 11, **characterised by** the fact that only one of the indentors (10) is provided with displacement measurement means (5).

13. The device according to any of claims 9 or 10, **characterised by** the fact that both indentors (10) are provided with force and displacement measurement means (8; 5).

14. The use of a device according to any of the preceding claims, for "continuous" or "instrumented" indentation of metal sheets (2), in particular thin metal sheets, plates or sheet materials.

## Patentansprüche

1. Vorrichtung für die "kontinuierliche" oder "instrumentierte" Indentierung eines Werkstoffs (2), die Folgendes umfasst:
- einen Indenter (10);
- Mittel zum Halten (40; 6) des zu indentierenden Werkstoffs (2);
- Mittel zum Bewegen des Indenters (10) und/oder Mittel zum Halten (40; 6), um den Indenter (10) mit dem Werkstoff (2) in Kontakt zu bringen und ihn in diesen eindringen zu lassen;
- Mittel zum Messen (8; 5) der Kraft und der Bewegung des Indenters (10) im Laufe seines Eindringens in den Werkstoff (2),
wobei die Haltemittel (40; 6), in der Verlängerung der Längsachse (X-X') des Indenters (10), eine konvexe Fläche (6) für die Aufnahme des Werkstoffs (2) umfassen, die in Richtung des Indenters (10) ausgerichtet ist, derart, dass der Werkstoff (2) auf dieser Fläche (6) punktuell oder quasi punktuell aufliegen kann;
wobei der Indenter (10) einstückig ist, d. h. dass er eine Indentierungsspitze (101) aufweist, die einstückig mit dem Körper des Indenters ausgebildet ist;
**dadurch gekennzeichnet, dass** die Mittel zum Messen der Bewegung des Indenters (10) im Laufe seines Eindringens in den Werkstoff (2) mindestens drei Bewegungssensoren (5) umfassen, die winklig angeordnet sind, derart, dass sie um den Indenter (10) herum äquidistant angeordnet sind.

2. Vorrichtung nach Anspruch 1, **dadurch gekennzeichnet, dass** die konvexe Fläche die Fläche einer Kugel (6) oder eines Kugelabschnitts ist.

3. Vorrichtung nach Anspruch 2, **dadurch gekennzeichnet, dass** die Haltemittel auch eine Platte (40) umfassen, auf der die Kugel (6) oder der Kugelabschnitt aufliegt.

4. Vorrichtung nach Anspruch 3, **dadurch gekennzeichnet, dass** die Platte (40) Mittel zur Positionierung (401) und/oder Befestigung der Kugel (6) oder des Kugelabschnitts aufweist.

5. Vorrichtung nach Anspruch 1, **dadurch gekennzeichnet, dass** die konvexe Fläche (6) einstückig mit einer Halteplatte (40) ist.

6. Vorrichtung nach einem der vorhergehenden Ansprüche, **dadurch gekennzeichnet, dass** der Indenter (10) aus Wolframcarbid oder aus einem anderen beliebigen Material mit hoher Härte ist.

7. Vorrichtung nach einem der vorhergehenden Ansprüche, **dadurch gekennzeichnet, dass** die Sensoren (5) vom Typ berührungsloser kapazitiver Sensor sind.

8. Vorrichtung nach einem der vorhergehenden Ansprüche, **dadurch gekennzeichnet, dass** sie Mittel umfasst, die geeignet sind, den von jedem der Sensoren (5) gemessenen Abstand aufzuzeichnen sowie den Mittelwert dieser drei Abstände zu berechnen, wobei dieser Mittelwert als Wert für das Eindringen des Indenters (10) in den Werkstoff (2) angesehen wird.

9. Vorrichtung nach einem der Ansprüche 1 und 6 bis 8, wenn letztere von Anspruch 1 abhängig sind, **dadurch gekennzeichnet, dass** die konvexe Fläche (6) von der Spitze (101) eines zweiten Indenters (10) gebildet ist, der sich in der Verlängerung des ersten Indenters (10) und diesem entgegengesetzt erstreckt.

10. Vorrichtung nach Anspruch 11, **dadurch gekennzeichnet, dass** sie die Form eines Zangenpaares aufweist, wobei jeder Indenter (10) mit einer Backe (72, 73) dieses Zangenpaares (7) fest verbunden ist.

11. Vorrichtung nach einem der Ansprüche 9 oder 10, **dadurch gekennzeichnet, dass** nur einer der Indenter (10) mit Mitteln zum Messen (8) der Kraft versehen ist.

12. Vorrichtung nach einem der Ansprüche 9 bis 11, **dadurch gekennzeichnet, dass** nur einer der Indenter (10) mit Mitteln zum Messen (5) der Bewegung versehen ist.

13. Vorrichtung nach einem der Ansprüche 9 oder 10, **dadurch gekennzeichnet, dass** die zwei Indenter (10) mit Mitteln zum Messen (8; 5) der Kraft und der Bewegung versehen sind.

14. Verwendung einer Vorrichtung nach einem der vorhergehenden Ansprüche für die "kontinuierliche" oder "instrumentierte" Indentierung von Blechen (2), insbesondere von dünnen Blechen, Platten oder blattförmigen Werkstoffen.
